# EUROPEAN PATENT APPLICATION

(11) **EP 4 826 548 A1**
(43) Date of publication of application: **21.10.2026**
(21) Application number: 24910951.3
(22) Date of filing: 20.12.2024
(51) Int. Cl.: G06F 12/06

(54) **DATA TRANSMISSION METHOD AND RELATED APPARATUS**

(30) Priority: 29.12.2023 CN 202311863899
(71) Applicant: Huawei Technologies Co., Ltd., Shenzhen, Guangdong 518129 (CN)
(72) Inventor: WEI, Xingda, Shanghai 200240 (CN); LU, Fangming, Shanghai 200240 (CN); CHEN, Rong, Shanghai 200240 (CN); CHEN, Haibo, Shenzhen, Guangdong 518129 (CN)
(74) Representative: Körber, Martin Hans
(86) International application number: PCT/CN2024/140875
(87) International publication number: WO 2025/140022

(57) **Abstract**

A data transmission method is provided, and is applied to data transmission between different computing apparatuses. In the method, a first computing apparatus that needs to consume data obtains a virtual address and a page table that are of the data and that are on a second computing apparatus serving as a data producer, and determines, based on the virtual address and the page table that are of the data, a physical address that is of the data and that is on the second computing apparatus; and further directly reads required data from the physical address on the second computing apparatus. This avoids a data forwarding process, a serialization process, and a deserialization process, and can effectively improve data transmission efficiency and reduce performance overheads caused by data transmission.

## Description

This application claims priority to Chinese Patent Application No. 202311863899.5, filed with the China National Intellectual Property Administration on December 29, 2023 and entitled "DATA TRANSMISSION METHOD AND RELATED APPARATUS", which is incorporated herein by reference in its entirety.

### TECHNICAL FIELD

This application relates to the field of computer technologies, and in particular, to a data transmission method and a related apparatus.

### BACKGROUND

In the cloud computing field, to reduce the burden of application deployment on developers, a serverless (Serverless) platform emerges. The Serverless platform provides a microarchitecture, which can simplify application deployment, so that developers do not need to deploy, configure, or manage server services. In other words, all server services required for application running are provided by the Serverless platform.

When using the Serverless platform, developers only need to abstract a service into a function, package the function and a dependency of the function into a container image, and upload the container image to the Serverless platform. When the function needs to be called (for example, a network request needs to call the function), the Serverless platform automatically starts a container to run the function. For functions on the Serverless platform, different functions may run on different servers, and the different functions usually need to exchange data. Therefore, on the Serverless platform, the data exchanged by the functions is transmitted between different servers.

Currently, in a related technology, a function serving as a data producer serializes generated data, and then sends the serialized data to an orchestrator. The orchestrator forwards the serialized data to a function serving as a data consumer. Finally, the function serving as the data consumer performs deserialization to restore raw data. The data producer, the orchestrator, and the data consumer are usually located on different servers. The data needs to be forwarded by the orchestrator in a transmission process, and serialization and deserialization operations are performed on the data in the transmission process. Consequently, data transmission efficiency between functions is low.

### SUMMARY

This application provides a data transmission method, to reduce performance overheads caused by data transmission.

A first aspect of this application provides a data transmission method, applied to data transmission between different computing apparatuses. The method includes: First, a first computing apparatus obtains a first virtual address, a network address, and a page table. The first virtual address is a virtual address that is on a second computing apparatus and that corresponds to first data generated by the second computing apparatus, the network address is an address of the second computing apparatus, and the page table is used to record a mapping relationship between a virtual address and a physical address on the second computing apparatus. In addition, the first computing apparatus is a consumer of the first data, and the second computing apparatus is a producer of the first data. In other words, the first data generated by the second computing apparatus needs to be transmitted to the first computing apparatus.

Then, the first computing apparatus determines, based on the first virtual address and the page table, a first physical address at which the first data is located on the second computing apparatus, that is, obtains a physical address at which the first data is actually located in a memory of the second computing apparatus.

Next, the first computing apparatus may read the first data from the first physical address on the second computing apparatus via a network based on the network address of the second computing apparatus. This avoids performing a serialization process and a serialization process on the first data, and no other orchestrator apparatus is needed to help forward the first data.

**In** this solution, the first computing apparatus that needs to consume data obtains a virtual address and a page table that are of the data and that are on the second computing apparatus serving as a data producer, and determines, based on the virtual address and the page table that are of the data, a physical address that is of the data and that is on the second computing apparatus; and further directly reads required data from the physical address on the second computing apparatus. This avoids a data forwarding process, a serialization process, and a deserialization process, and can effectively improve data transmission efficiency and reduce performance overheads caused by data transmission.

In a possible implementation, the data transmission method is applied to a Serverless platform, the first computing apparatus and the second computing apparatus are respectively configured to run different functions on the Serverless platform, and an input of a function run on the first computing apparatus includes data generated by a function run on the second computing apparatus. In other words, the function run on the first computing apparatus depends on the function run on the second computing apparatus. Therefore, the first data generated by the function run on the second computing apparatus needs to be transmitted to the function run on the first computing apparatus.

In a possible implementation, that the first computing apparatus determines the first physical address at which the first data is located on the second computing apparatus specifically includes: In response to a page fault caused when the function run on the first computing apparatus requests to access the first virtual address, the first computing apparatus determines, based on the first virtual address and the page table, the first physical address at which the first data is located on the second computing apparatus. In other words, that the first computing apparatus determines the first physical address corresponding to the first data may be triggered when the function run on the first computing apparatus accesses data and a page fault occurs.

In this solution, a conventional procedure for processing the page fault is extended, so that a computing apparatus can choose to read required data from another computing apparatus via a network, thereby implementing efficient data transmission between computing apparatuses, and improving implementability of this solution. In addition, that the computing apparatus reads the required data via the network is completed without using a function, so that an existing function can adapt to this solution without being changed, thereby improving applicability of this solution.

In a possible implementation, the first computing apparatus receives the first virtual address, the network address, and a virtual address segment that are sent by an orchestrator apparatus. The orchestrator apparatus is configured to obtain a virtual address of the data generated by the second computing apparatus, and the virtual address segment indicates a virtual address range corresponding to the data generated by the second computing apparatus. Then, the first computing apparatus obtains, from the second computing apparatus based on the network address, the page table corresponding to the virtual address segment. The page table is used to record a mapping relationship between a virtual address in the virtual address segment and a physical address.

In this solution, the orchestrator apparatus forwards a virtual address and a virtual address segment that have a small data amount to the first computing apparatus, and the first computing apparatus directly obtains a page table with a large data amount from the second computing apparatus based on the virtual address segment. This can reduce a data amount forwarded by the orchestrator apparatus, and improve efficiency of obtaining various information by the first computing apparatus.

In a possible implementation, that the first computing apparatus obtains, from the second computing apparatus, the page table corresponding to the virtual address segment includes: The first computing apparatus sends a page table read request to the second computing apparatus. The page table read request includes the virtual address segment, and the page table read request is used to request to read the page table corresponding to the virtual address segment. The first computing apparatus receives the page table sent by the second computing apparatus.

In a possible implementation, the data transmission method further includes: The first computing apparatus receives first virtual address space sent by the orchestrator apparatus; and the first computing apparatus runs the function based on the first virtual address space. The first virtual address space indicates space in which a virtual address used by the function is located.

In a possible implementation, the first virtual address space does not overlap second virtual address space, and the second virtual address space is virtual address space used by the function run on the second computing apparatus.

In this solution, the orchestrator apparatus for orchestrating all computing apparatuses is responsible for allocating virtual address space used by the function on the first computing apparatus, so that the virtual address space used by the function on the first computing apparatus does not overlap virtual address space used by a function on another computing apparatus, thereby ensuring that no address conflict occurs when the computing apparatuses read data from each other based on virtual addresses, and ensuring that the solution can be normally executed.

A second aspect of this application provides a data transmission method, including: A second computing apparatus sends a first virtual address and a virtual address segment to an orchestrator apparatus. The first virtual address is a virtual address that is on the second computing apparatus and that corresponds to first data generated by the second computing apparatus, the virtual address segment indicates a virtual address range corresponding to data generated by the second computing apparatus, the first virtual address belongs to the virtual address segment, and the orchestrator apparatus is configured to forward the first virtual address and the virtual address segment to a first computing apparatus. The second computing apparatus sends a page table to the first computing apparatus in response to the first computing apparatus requesting to read the virtual address segment. The page table is used to record a mapping relationship between a virtual address in the virtual address segment and a physical address, and the page table records a mapping relationship between the first virtual address and a first physical address. The second computing apparatus returns the first data at the first physical address to the first computing apparatus in response to the first computing apparatus requesting to access the first physical address.

In this solution, the first computing apparatus that needs to consume data obtains a virtual address and a page table that are of the data and that are on the second computing apparatus serving as a data producer, and determines, based on the virtual address and the page table that are of the data, a physical address that is of the data and that is on the second computing apparatus; and further directly reads required data from the physical address on the second computing apparatus. This avoids a data forwarding process, a serialization process, and a deserialization process, and can effectively improve data transmission efficiency and reduce performance overheads caused by data transmission.

In a possible implementation, the data transmission method is applied to a Serverless platform, the first computing apparatus and the second computing apparatus are respectively configured to run different functions on the Serverless platform, and an input of a function run on the first computing apparatus includes data generated by a function run on the second computing apparatus.

In a possible implementation, the data transmission method further includes: The second computing apparatus sets permission for a target physical address to copy-on-write. The target physical address is a physical address that is recorded in the page table and whose original permission is write.

In other words, after the first computing apparatus obtains the page table, all permission corresponding to physical addresses that are recorded in the page table and whose original permission is write is changed to copy-on-write. In this way, even if the first computing apparatus subsequently triggers calling, and modifies data on the second computing apparatus, the data on the second computing apparatus is not affected. In other words, the data on the second computing apparatus is not modified by the first computing apparatus, thereby ensuring that the second computing apparatus can normally store the data generated by the function.

In a possible implementation, the data transmission method further includes: The second computing apparatus receives second virtual address space sent by the orchestrator apparatus; and the second computing apparatus runs the function based on the second virtual address space. The second virtual address space indicates space in which a virtual address used by the function is located.

In a possible implementation, first virtual address space does not overlap the second virtual address space, and the first virtual address space is virtual address space used by the function run on the first computing apparatus.

A third aspect of this application provides a first computing apparatus, including: a transceiver module, configured to obtain a first virtual address, a network address, and a page table, where the first virtual address is a virtual address that is on a second computing apparatus and that corresponds to first data generated by the second computing apparatus, the network address is an address of the second computing apparatus, and the page table is used to record a mapping relationship between a virtual address and a physical address on the second computing apparatus; and a processing module, configured to determine, based on the first virtual address and the page table, a first physical address at which the first data is located on the second computing apparatus. The transceiver module is configured to read the first data from the first physical address on the second computing apparatus based on the network address.

In a possible implementation, the first computing apparatus and the second computing apparatus are respectively configured to run different functions on a Serverless platform, and an input of a function run on the first computing apparatus includes data generated by a function run on the second computing apparatus.

In a possible implementation, the processing module is further configured to: in response to a page fault caused when the function run on the first computing apparatus requests to access the first virtual address, determine, by the first computing apparatus based on the first virtual address and the page table, the first physical address at which the first data is located on the second computing apparatus.

In a possible implementation, the transceiver module is further configured to: receive the first virtual address, the network address, and a virtual address segment that are sent by an orchestrator apparatus, where the orchestrator apparatus is configured to obtain a virtual address of the data generated by the second computing apparatus, and the virtual address segment indicates a virtual address range corresponding to the data generated by the second computing apparatus; and obtain, from the second computing apparatus based on the network address, the page table corresponding to the virtual address segment, where the page table is used to record a mapping relationship between a virtual address in the virtual address segment and a physical address.

In a possible implementation, the transceiver module is further configured to: send a page table read request to the second computing apparatus, where the page table read request includes the virtual address segment, and the page table read request is used to request to read the page table corresponding to the virtual address segment; and receive the page table sent by the second computing apparatus.

In a possible implementation, the transceiver module is further configured to receive first virtual address space sent by the orchestrator apparatus; and the processing module is further configured to run the function based on the first virtual address space. The first virtual address space indicates space in which a virtual address used by the function is located.

In a possible implementation, the first virtual address space does not overlap second virtual address space, and the second virtual address space is virtual address space used by the function run on the second computing apparatus.

A fourth aspect of this application provides a second computing apparatus, including: a transceiver module, configured to send a first virtual address and a virtual address segment to an orchestrator apparatus. The first virtual address is a virtual address that is on the second computing apparatus and that corresponds to first data generated by the second computing apparatus, the virtual address segment indicates a virtual address range corresponding to data generated by the second computing apparatus, the first virtual address belongs to the virtual address segment, and the orchestrator apparatus is configured to forward the first virtual address and the virtual address segment to a first computing apparatus. The transceiver module is further configured to send a page table to the first computing apparatus in response to the first computing apparatus requesting to read the virtual address segment. The page table is used to record a mapping relationship between a virtual address in the virtual address segment and a physical address, and the page table records a mapping relationship between the first virtual address and a first physical address; and the transceiver module is further configured to return the first data at the first physical address to the first computing apparatus in response to the first computing apparatus requesting to access the first physical address.

In a possible implementation, the first computing apparatus and the second computing apparatus are respectively configured to run different functions on a Serverless platform, and an input of a function run on the first computing apparatus includes data generated by a function run on the second computing apparatus.

In a possible implementation, the second computing apparatus further includes: a processing module, configured to set permission for a target physical address to copy-on-write. The target physical address is a physical address that is recorded in the page table and whose original permission is write.

In a possible implementation, the second computing apparatus further includes the processing module; the transceiver module is further configured to receive second virtual address space sent by the orchestrator apparatus; and the processing module is configured to run the function based on the second virtual address space. The second virtual address space indicates space in which a virtual address used by the function is located.

In a possible implementation, first virtual address space does not overlap the second virtual address space, and the first virtual address space is virtual address space used by the function run on the first computing apparatus.

A fifth aspect of this application provides a computing apparatus, including a memory and a processor. The memory stores code. The processor is configured to execute the code. When the code is executed, the computing apparatus performs the method according to any implementation of the first aspect or the second aspect.

A sixth aspect of this application provides a data transmission system, including the first computing apparatus according to any implementation of the third aspect, the second computing apparatus according to any implementation of the fourth aspect, and an orchestrator apparatus. The orchestrator apparatus is configured to implement data forwarding between the first computing apparatus and the second computing apparatus.

A seventh aspect of this application provides a computer-readable storage medium. The computer-readable storage medium stores a computer program, and when the computer program is run on a computer, the computer is enabled to perform the method according to any implementation of the first aspect.

An eighth aspect of this application provides a computer program product. When the computer program product is run on a computer, the computer is enabled to perform the method according to any implementation of the first aspect.

A ninth aspect of this application provides a chip, including one or more processors. A part or all of the processors are configured to read and execute a computer program stored in a memory, to perform the method according to any implementation of the first aspect.

Optionally, the chip includes a memory, and the memory is connected to the processor through a circuit or a wire. Optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface. The method provided in embodiments of this application may be implemented by one chip, or may be cooperatively implemented by a plurality of chips.

For technical effects brought by any design manner of the second aspect to the sixth aspect, refer to technical effects brought by different implementations of the first aspect. Details are not described herein again.

### BRIEF DESCRIPTION OF DRAWINGS

FIG. 1 is a diagram of a Serverless workflow according to an embodiment of this application;
FIG. 2 is a diagram of transferring data between functions in a Serverless workflow according to an embodiment of this application;
FIG. 3 is a diagram of transferring data between functions in a related technology;
FIG. 4 is a diagram of a structure of an electronic device 101 according to an embodiment of this application;
FIG. 5 is a schematic flowchart of a data transmission method according to an embodiment of this application;
FIG. 6 is a schematic flowchart of a data transmission method according to an embodiment of this application;
FIG. 7 is a diagram of an architecture of a Serverless platform according to an embodiment of this application;
FIG. 8 is a diagram of a procedure of planning virtual address space for a function in a Serverless workflow according to an embodiment of this application;
FIG. 9 is a diagram of a procedure of invoking an rmap interface by a computing apparatus according to an embodiment of this application;
FIG. 10 is a diagram of a procedure of processing a page fault according to an embodiment of this application;
FIG. 11 is a diagram of some scenarios to which a data transmission method is applied according to an embodiment of this application;
FIG. 12 is a diagram of a structure of a first computing apparatus according to an embodiment of this application;
FIG. 13 is a diagram of a structure of a second computing apparatus according to an embodiment of this application;
FIG. 14 is a diagram of a structure of an electronic device according to an embodiment of this application; and
FIG. 15 is a diagram of a structure of a computer-readable storage medium according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are merely a part but not all of embodiments of this application. Persons of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in appropriate cases, so that embodiments can be implemented in an order other than the order illustrated or described in this application. In addition, the terms "include", "have", and any variants thereof are intended to cover a non-exclusive inclusion. For example, a process, a method, a system, a product, or a device including a series of steps or modules is not necessarily limited to those clearly listed steps or modules, but may include other steps or modules that are not clearly listed or are inherent to the process, the method, the product, or the device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved.

Division into units in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

For ease of understanding, the following describes some technical terms used in this embodiment.

### (1) Serverless

Serverless is a model of cloud computing, and is essentially a new internet architecture. Serverless does not mean that there is no server. Instead, a developer does not need to care about server management and maintenance. In a conventional application architecture, the developer needs to focus on server configuration, expansion, maintenance, and monitoring. In the Serverless architecture, the developer only needs to focus on service logic of an application, and does not need to consider underlying server management. A cloud service provider automatically expands and manages underlying server resources, and automatically allocate resources based on application load.

### (2) Function

The function is a basic running unit in serverless computing (Serverless computing), and is essentially a segment of program code uploaded by a user. When a Serverless platform receives a request for calling a function, the platform starts a container and runs the function.

### (3) Container

The container is a process running manner, and can simplify application program deployment and provide stronger inter-process isolation. In embodiments, the container is actually a function running environment, and can implement isolation between functions.

### (4) Scheduling node

When a plurality of functions simultaneously run on a Serverless platform, a scheduling node centrally schedules the functions based on a dependency relationship between the functions. Usually, the scheduling node is also referred to as an orchestrator.

### (5) Host machine

The host machine is a server that runs a function. On a Serverless platform, a scheduling node selects an idle host machine to execute the function.

### (6) Serialization (Serialization)

Serialization is a process of converting state information of an object into a form that may be stored or transmitted. In brief, serialization is to convert memory data of a language into continuous binary data.

### (7) Deserialization

Deserialization is a process of converting continuous binary data generated in a serialization process into data in a memory.

### (8) Page table

The page table is a data structure that records a mapping relationship between a virtual address and a physical address. Generally, in a computer, a memory management unit (Memory Management Unit, MMU) may implement translation between a virtual address and a physical address by querying the page table.

### (9) Virtual address (Virtual address, VA)

The virtual address is an address of a storage unit that is seen from a perspective of an application program in a computer architecture. The virtual address is usually different from a physical address of the storage unit. The virtual address needs to be translated into the physical address (Physical Address, PA) by using an address translator.

In brief, the virtual address is usually an address generated by a CPU in a computer when the application program runs, and the physical address is a real address in a physical memory.

### (10) Copy-on-write (Copy-on-write, COW)

Copy-on-write is a resource management technology used in computer programming, and may effectively implement copying or a copy operation on modifiable resources. If a resource is copied but not modified, it is unnecessary to create a new resource, and the resource can be shared between a copy and an original; or if a resource is modified, a copy still needs to be created. Sharing a resource in a copy-on-write manner can significantly reduce resource consumption of an unmodified copy, and increase a small quantity of overheads for a resource modification operation.

### (11) Remote procedure call (Remote Procedure Call, RPC)

The RPC is a protocol that requests a service from a remote computer via a network without knowing an underlying network technology. Specifically, for a server A and a server B, an application is deployed on the server A. If the application wants to call a function provided by an application on the server B, the function cannot be directly called because the function is not in same memory space as the application. Therefore, a network needs to be used to express calling semantics and convey calling data. The RPC provides a manner in which a service is obtained from a remote server via the network.

### (12) Page fault

The page fault is an abnormality that occurs because an MMU cannot find a corresponding physical address mapping relationship or access permission of a central processing unit (Central Processing Unit, CPU) is inconsistent with access permission for a physical page, when the CPU accesses a virtual address.

Specifically, the CPU may access, through an address bus, all peripherals connected to the address bus, including a physical memory, an I/O device, and the like. However, an access address sent by the CPU is not a physical address of the peripherals on the address bus, but a virtual address. The MMU translates the virtual address into a physical address and then sends the physical address through the address bus. Such a translation relationship between a virtual address and a physical address on the MMU needs to be created, and access permission for the physical page also needs to be set.

### (13) Primitive

The primitive is instructions for invoking a core layer subroutine in an operating system. The primitive is a program segment including several instructions, is used to implement a specific function, and cannot be interrupted during execution. In the operating system, a part of operations that are invoked by a process, such as a queue operation, a semaphore operation, or a peripheral check/start operation, cannot be interrupted once the operation starts to be executed. Once the operation is interrupted, there is an operation error, causing system disorder. Therefore, these operations need to be implemented by using primitives. The primitive is a constituent part of a kernel (not a process, but a set of program modules) of the operating system, resides in a memory, and is usually executed in a kernel mode. Once the primitive starts to be executed, the primitive needs to be executed continuously and cannot be interrupted.

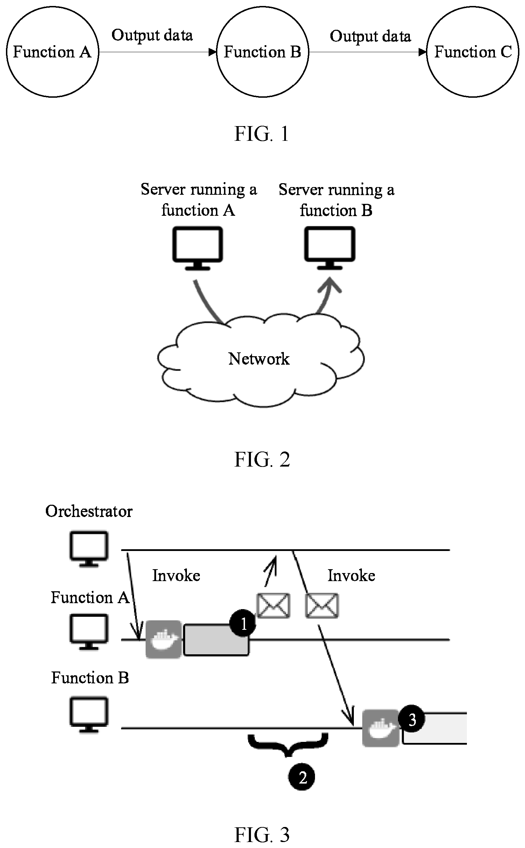

On a Serverless platform, a Serverless computing workflow (Serverless workflow) is usually used to implement collaboration between functions. The Serverless workflow provides a manner in which a more complex application is built by combining different functions. FIG. 1 is a diagram of a Serverless workflow according to an embodiment of this application. As shown in FIG. 1, in the Serverless workflow, after a function A is executed, a function B continues to be executed by using output data of the function A as an input, a function C continues to be executed by using output data of the function B as an input, and finally, output data of the function C is returned to a user as a result. In FIG. 1, there is a data dependency relationship between the function B and the function A. In other words, the function B depends on the data output by the function A. There is also a data dependency relationship between the function C and the function B. In other words, the function C depends on the data output by the function B.

Generally, a data dependency relationship between functions is defined by a directed acyclic graph (Directed acyclic graph, DAG). Vertices in the DAG are functions, and an edge between vertices in the DAG represents a data dependency relationship between functions.

FIG. 2 is a diagram of transferring data between functions in a Serverless workflow according to an embodiment of this application. As shown in FIG. 2, in the Serverless workflow, different functions may run on different servers usually. Therefore, data needs to be transmitted between the different functions via a network.

FIG. 3 is a diagram of transferring data between functions in a related technology. As shown in FIG. 3, it is assumed that a function A needs to transfer data to a function B, and the function A and the function B run on different servers. First, an orchestrator invokes a server of the function A to start a container to run the function A, and when running the function A, generates data that needs to be transferred. To transmit the data generated by the function A to the function B, the server of the function A serializes the data (namely, step 1 shown in FIG. 3), and then sends the serialized data to the orchestrator via a network. The orchestrator invokes a server of the function B to start the function B, and then sends the serialized data to the server of the function B. The server of the function B deserialize the serialized data, and transfers obtained data to the function B.

It can be learned from FIG. 3 that, when functions on different servers transmit data, not only does the orchestrator need to forward the transmitted data, but also serialization and deserialization need to be performed on the data in a transmission process. Consequently, data transmission efficiency between functions is low, and performance overheads of data transmission are high.

In view of this, embodiments of this application provide a data transmission method. A first computing apparatus that needs to consume data obtains a virtual address and a page table that are of the data and that are on a second computing apparatus serving as a data producer, and determines, based on the virtual address and the page table that are of the data, a physical address that is of the data and that is on the second computing apparatus; and further directly reads required data from the physical address on the second computing apparatus. This avoids a data forwarding process, a serialization process, and a deserialization process, and can effectively improve data transmission efficiency and reduce performance overheads caused by data transmission.

The data transmission method provided in embodiments of this application may be applied to an electronic device. The electronic device may serve as a computing apparatus in a computing cluster. For example, the electronic device may be a physical device such as a server, a smartphone (mobile phone), a personal computer (personal computer, PC), or a notebook computer. In addition, the electronic device may alternatively be a virtual device such as a virtual machine running on a server.

In conclusion, the electronic device to which the data transmission method provided in embodiments is applied may be a physical device such as a server serving as a computing apparatus in the computing cluster, or may be a virtual device such as a virtual machine.

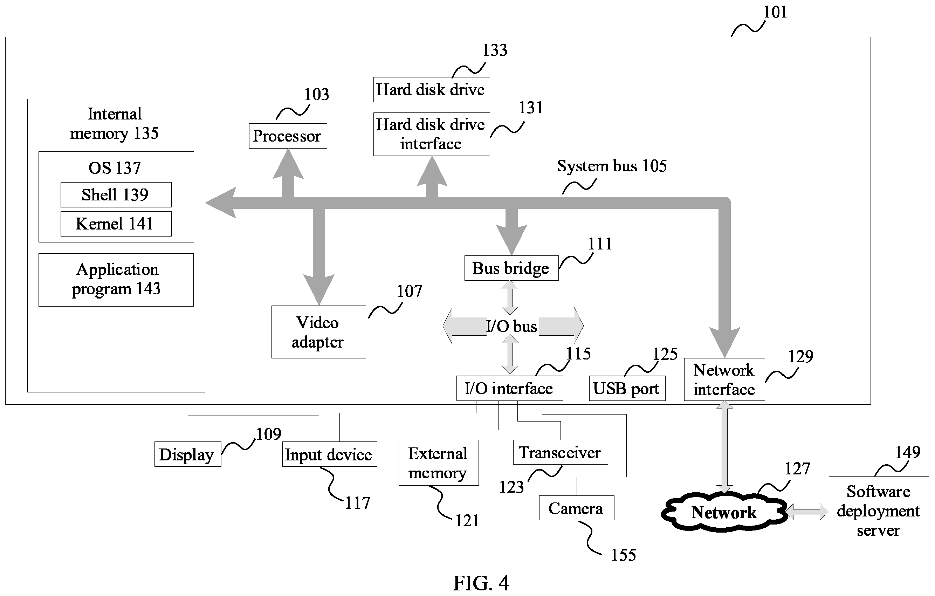

FIG. 4 is a diagram of a structure of an electronic device 101 according to an embodiment of this application. As shown in FIG. 4, the electronic device 101 includes a processor 103. The processor 103 is coupled to a system bus 105. The processor 103 may be one or more processors, and each processor may include one or more processor cores. A video adapter (video adapter) 107 is further included, the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB interface.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus like an ASIC.

The electronic device 101 may communicate with a software deployment server 149 through a network interface 129. For example, the network interface 129 is a hardware network interface, for example, a network interface card. A network 127 may be an external network such as the internet, or an internal network such as the Ethernet or a virtual private network (virtual private network, VPN). Optionally, the network 127 may alternatively be a wireless network, for example, a Wi-Fi network, a cellular network, or the like.

A hard disk drive interface 131 is coupled to the system bus 105. The hardware drive interface is connected to a hard disk drive 133. An internal memory 135 is coupled to the system bus 105. Data running in the internal memory 135 may include an operating system (OS) 137, an application program 143, and a schedule table of the electronic device 101.

The operating system includes a shell 139 and a kernel (kernel) 141. The shell 139 is an interface between a user and the kernel of the operating system. The shell is an outermost layer of the operating system. The shell manages interaction between the user and the operating system: waiting for an input from the user, interpreting the input from the user to the operating system, and processing various output results of the operating system.

The kernel 141 includes components of the operating system that are configured to manage a memory, a file, a peripheral, and a system resource. The kernel 141 directly interacts with hardware. The kernel of the operating system usually runs a process, provides inter-process communication, and provides CPU time slice management, interruption, memory management, I/O management, and the like.

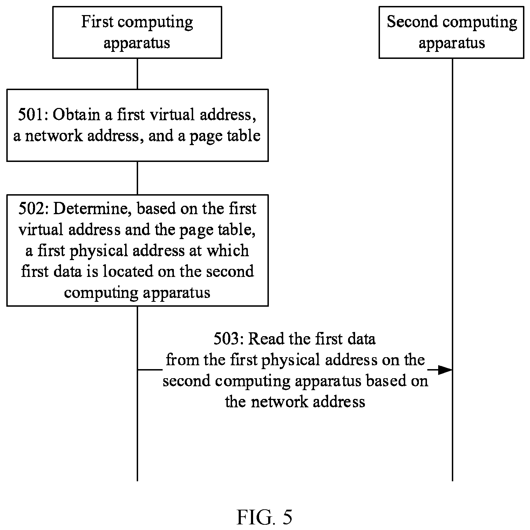

The foregoing describes a scenario to which the method provided in embodiments of this application is applied and an execution device. The following describes a specific execution process of the method provided in embodiments of this application. FIG. 5 is a schematic flowchart of a data transmission method according to an embodiment of this application. As shown in FIG. 5, the data transmission method includes the following steps 501 to 503.

Step 501: A first computing apparatus obtains a first virtual address, a network address, and a page table.

In this embodiment, the first virtual address is a virtual address that is on a second computing apparatus and that corresponds to first data generated by the second computing apparatus. The network address is an address of the second computing apparatus. The page table is used to record a mapping relationship between a virtual address and a physical address on the second computing apparatus. In addition, the first computing apparatus is a consumer of the first data, and the second computing apparatus is a producer of the first data. In other words, the first data generated by the second computing apparatus needs to be transmitted to the first computing apparatus.

Generally, after a function or a process on the second computing apparatus generates the first data, the function or the process on the second computing apparatus has the virtual address of the first data. The first data is actually stored in a memory of the second computing apparatus, and a physical address, in the memory, corresponding to the first data is unknown to the function or the process that generates the first data. The second computing apparatus maintains the mapping relationship between a virtual address and a physical address of data by using the page table. In other words, the page table records a mapping relationship between the virtual address and the physical address of the first data.

Optionally, the data transmission method provided in this embodiment is applied to a Serverless platform, the first computing apparatus and the second computing apparatus are respectively configured to run different functions on the Serverless platform, and an input of a function run on the first computing apparatus includes data generated by a function run on the second computing apparatus. In other words, the function run on the first computing apparatus depends on the function run on the second computing apparatus. Therefore, the first data generated by the function run on the second computing apparatus needs to be transmitted to the function run on the first computing apparatus.

The first computing apparatus and the second computing apparatus are, for example, different servers, or computing hardware (for example, central processing units) or virtual machines deployed on different servers. In conclusion, data transmission needs to be implemented between the first computing apparatus and the second computing apparatus via a network.

It should be noted that, in addition to the Serverless platform, the data transmission method provided in this embodiment may also be applied to another distributed system, namely, a scenario in which data needs to be transmitted between different computing apparatuses. A specific scenario to which the data transmission method is applied is not limited in this embodiment.

Step 502: The first computing apparatus determines, based on the first virtual address and the page table, a first physical address at which the first data is located on the second computing apparatus.

After obtaining the first virtual address and the page table, the first computing apparatus can determine, by querying a physical address corresponding to the first virtual address from the page table, the first physical address at which the first data is located on the second computing apparatus, that is, obtain a physical address at which the first data is actually located in the memory of the second computing apparatus.

Optionally, that the first computing apparatus determines the first physical address corresponding to the first data may be triggered by the function run on the first computing apparatus. For example, when the first computing apparatus runs the function, because input data of the function includes the first data, the function requests to access the first data when running. In addition, because the first computing apparatus actually does not store the first data, the first computing apparatus does not record a physical address corresponding to the virtual address (namely, the first virtual address) of the first data. Therefore, when the function run on the first computing apparatus requests to access the first virtual address corresponding to the first data, a page fault is triggered.

In this case, in response to the page fault caused when the function run on the first computing apparatus requests to access the first virtual address, the first computing apparatus determines, based on the first virtual address and the page table, the first physical address at which the first data is located on the second computing apparatus.

In this solution, a conventional procedure for processing the page fault is extended, so that a computing apparatus can choose to read required data from another computing apparatus via a network, thereby implementing efficient data transmission between computing apparatuses, and improving implementability of this solution.

Step 503: The first computing apparatus reads the first data from the first physical address on the second computing apparatus based on the network address.

After determining the first physical address at which the first data is stored on the second computing apparatus, the first computing apparatus may directly read the first data from the first physical address on the second computing apparatus via a network based on the network address of the second computing apparatus. This avoids performing a serialization process and a serialization process on the first data, and no other orchestrator apparatus is needed to help forward the first data.

In conclusion, this solution is equivalent to establishing a distributed shared memory on the second computing apparatus, so that data in the memory of the second computing apparatus can be shared with another computing apparatus (for example, the first computing apparatus). In this way, another computing apparatus that depends on the data generated by the second computing apparatus can directly read data from the distributed shared memory of the second computing apparatus. This avoids performing the serialization process and the deserialization process on the data.

For ease of understanding, the following describes in detail how a first computing apparatus obtains a first virtual address, a network address, and a page table.

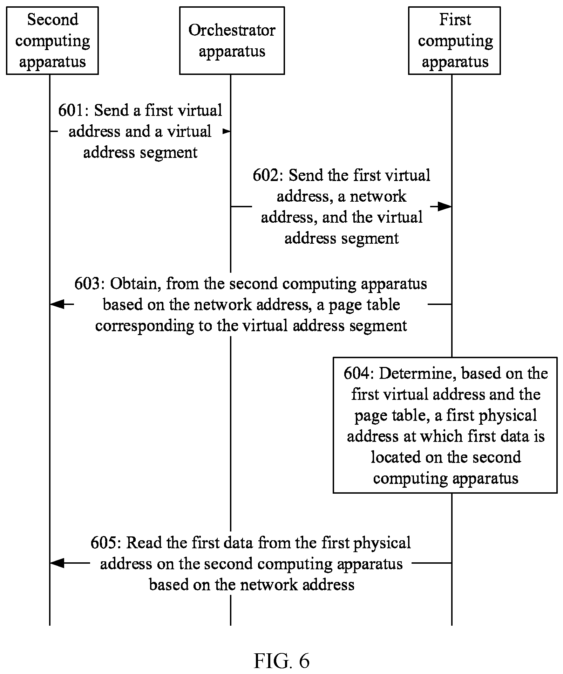

FIG. 6 is a schematic flowchart of a data transmission method according to an embodiment of this application. As shown in FIG. 5, the data transmission method includes the following steps 601 to 605.

Step 601: A second computing apparatus sends a first virtual address and a virtual address segment to an orchestrator apparatus.

In this embodiment, the first virtual address is a virtual address that is on the second computing apparatus and that corresponds to first data generated by the second computing apparatus. The first data may be generated by a function run on the second computing apparatus. The virtual address segment indicates a virtual address range corresponding to data generated by the second computing apparatus, and the first virtual address belongs to the virtual address segment. For example, the virtual address segment is a virtual address range corresponding to data generated by the function run on the second computing apparatus. The orchestrator apparatus is configured to forward the first virtual address and the virtual address segment to a first computing apparatus.

The orchestrator apparatus is, for example, the scheduling node described above, and is configured to schedule each computing apparatus to run a corresponding function.

Step 602: The orchestrator apparatus sends the first virtual address, a network address, and the virtual address segment to the first computing apparatus.

After obtaining the first virtual address and the virtual address segment that are sent by the second computing apparatus, the orchestrator apparatus may determine that a computing apparatus that depends on the first data generated by the second computing apparatus is the first computing apparatus, and forward the first virtual address and the virtual address segment to the first computing apparatus. In addition, to ensure that the first computing apparatus can successfully obtain the first data from the second computing apparatus, the orchestrator apparatus may further send a network address of the second computing apparatus to the first computing apparatus.

For example, because the orchestrator apparatus schedules each computing apparatus to run the corresponding function, the orchestrator apparatus may determine, based on a data dependency relationship between functions, a data dependency relationship between computing apparatuses that run different functions. For example, when a function B depends on data output by a function A, the first computing apparatus runs the function B, and the second computing apparatus runs the function A, the orchestrator apparatus may determine that the data generated by the second computing apparatus needs to be transferred to the first computing apparatus. Therefore, the orchestrator apparatus forwards, to the first computing apparatus, the first virtual address and the virtual address segment that are sent by the second computing apparatus.

Step 603: The first computing apparatus obtains, from the second computing apparatus based on the network address, a page table corresponding to the virtual address segment.

The page table obtained by the first computing apparatus is used to record a mapping relationship between a virtual address in the virtual address segment and a physical address. Because the virtual address segment includes the first virtual address, the page table actually includes a mapping relationship between the first virtual address and a first physical address.

Optionally, the first computing apparatus reads the page table from the second computing apparatus, for example, in an RPC manner. For example, the first computing apparatus sends a page table read request to the second computing apparatus. The page table read request includes the virtual address segment, and the page table read request is used to request to read the page table corresponding to the virtual address segment. The second computing apparatus sends the page table to the first computing apparatus in response to the page table read request sent by the first computing apparatus, so that the first computing apparatus receives the page table sent by the second computing apparatus.

Optionally, before the first computing apparatus obtains the page table from the second computing apparatus, the second computing apparatus may set permission for a target physical address to copy-on-write. The target physical address is a physical address that is recorded in the page table and whose original permission is write. In other words, after the first computing apparatus obtains the page table, all permission corresponding to physical addresses that are recorded in the page table and whose original permission is write is changed to copy-on-write. In this way, even if the first computing apparatus subsequently triggers calling, and modifies data on the second computing apparatus, the data on the second computing apparatus is not affected. In other words, the data on the second computing apparatus is not modified by the first computing apparatus, thereby ensuring that the second computing apparatus can normally store the data generated by the function.

For example, if the first data generated by the second computing apparatus is called by a plurality of computing apparatuses, after the second computing apparatus changes the permission for the target physical address to copy-on-write, when any computing apparatus calls and modifies the data on the second computing apparatus, data stored in a memory of the second computing apparatus is not modified actually, thereby ensuring that another computing apparatus can normally call the data.

Step 604: The first computing apparatus determines, based on the first virtual address and the page table, the first physical address at which the first data is located on the second computing apparatus.

Step 605: The first computing apparatus reads the first data from the first physical address on the second computing apparatus based on the network address.

In this embodiment, steps 604 and 605 are similar to steps 502 and 503. For details, refer to steps 502 and 503. Details are not described herein again.

Because the first computing apparatus and the second computing apparatus are independent of each other (for example, the first computing apparatus and the second computing apparatus are two independent servers), when allocating virtual address space to functions, the first computing apparatus and the second computing apparatus may allocate same virtual address space.

Based on this, in some embodiments, to avoid an address conflict that occurs during data calling because functions run on the first computing apparatus and the second computing apparatus do not use a same virtual address, in this embodiment, the orchestrator apparatus may centrally allocate virtual address space used by the functions on the first computing apparatus and the second computing apparatus.

For example, before the first computing apparatus runs a function that uses the first data, the first computing apparatus receives first virtual address space sent by the orchestrator apparatus; and then, the first computing apparatus runs the function based on the first virtual address space. The first virtual address space indicates space in which a virtual address used by the function run on the first computing apparatus is located.

In addition, before the first computing apparatus runs the function that generates the first data, the second computing apparatus receives second virtual address space sent by the orchestrator apparatus, and the second computing apparatus runs the function based on the second virtual address space. The second virtual address space indicates space in which a virtual address used by the function run on the second computing apparatus is located.

The first virtual address space does not overlap the second virtual address space. In other words, virtual address space used by the function run on the first computing apparatus does not overlap virtual address space used by the function run on the second computing apparatus, to ensure that no address segment mapping conflict occurs between functions, and ensure that data calling can be normally implemented between functions.

The foregoing describes an execution procedure of the data transmission method provided in embodiments of this application. For ease of understanding, the following describes in detail an execution process of the data transmission method on a Serverless platform with reference to a specific example.

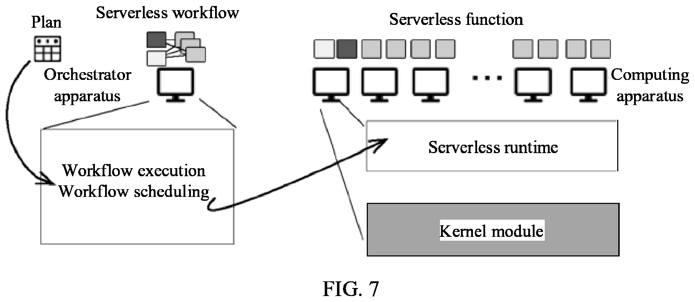

FIG. 7 is a diagram of an architecture of a Serverless platform according to an embodiment of this application. As shown in FIG. 7, the Serverless platform includes an orchestrator apparatus and a plurality of computing apparatuses. The orchestrator apparatus and the plurality of computing apparatuses may be deployed on different servers. The plurality of computing apparatuses are separately configured to run Serverless functions. For example, a plurality of different computing apparatuses separately run different functions in a same Serverless workflow. Each computing apparatus configured to run a function may include a kernel module and a Serverless runtime module.

The orchestrator apparatus is configured to plan address space of each function in the Serverless workflow, to avoid a memory access conflict when different functions transmit data by using a distributed shared memory.

The kernel module in the computing apparatus is an operating system kernel, and provides, for a function, a basic primitive for accessing the distributed shared memory. In addition, when the function accesses unread remote memory data, the kernel module reads, via a network, the corresponding data from a remote computing apparatus to a computing apparatus on which the function is located.

The Serverless runtime module in the computing apparatus is configured to receive a plan of the orchestrator apparatus during runtime, and dynamically create the distributed shared memory for the function by calling the primitive of the kernel module, so that the distributed shared memory can be efficiently used to transmit data between functions.

In this embodiment, a data transmission procedure may include two parts: pre-runtime and post-runtime. A function implemented during pre-runtime is to plan, for each function based on a computational graph (namely, a DAG) of the Serverless workflow, virtual address space used when the function runs. A function implemented during post-runtime is that after the function generates data, a computing apparatus reads, from a distributed shared memory of another computing apparatus, the data generated by the function.

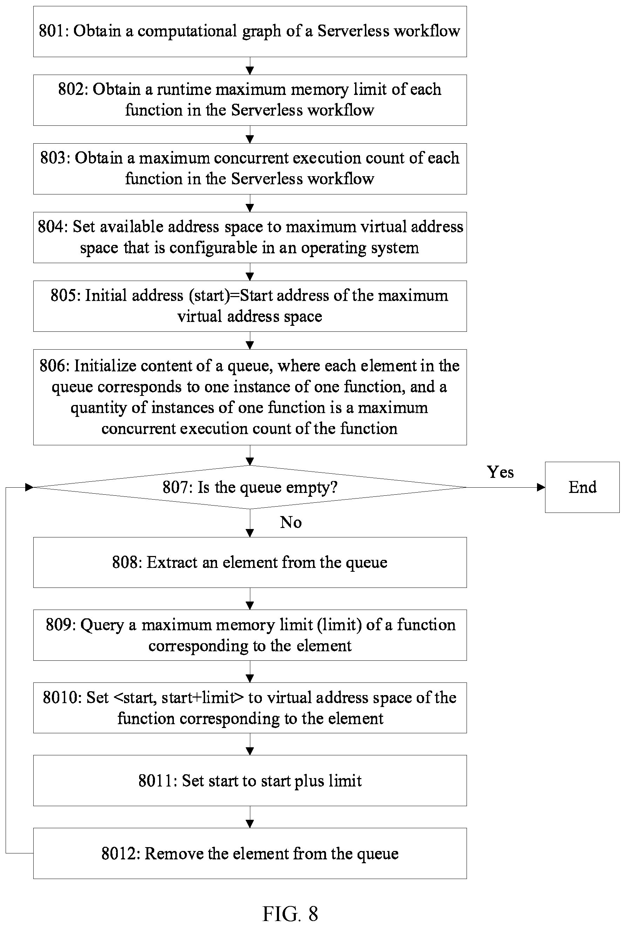

For example, FIG. 8 is a diagram of a procedure of planning virtual address space for a function in a Serverless workflow according to an embodiment of this application. As shown in FIG. 8, the procedure of planning the virtual address space for the function in the Serverless workflow includes the following steps 801 to 8012:
Step 801: Obtain a computational graph of the Serverless workflow.

The computational graph of the Serverless workflow is, for example, uploaded by a user who uses a Serverless platform. In addition, the computational graph of the Serverless workflow may be a directed acyclic graph shown in FIG. 1, and indicate a data dependency relationship between a plurality of functions in the Serverless workflow.

Step 802: Obtain a runtime maximum memory limit of each function in the Serverless workflow.

The runtime maximum memory limit of the function is maximum memory space that can be used by the function during runtime.

Step 803: Obtain a maximum concurrent execution count of each function in the Serverless workflow.

The maximum concurrent execution count of the function is a quantity of instances that are simultaneously started by functions of a same type.

Step 804: Set available address space to maximum virtual address space that is configurable in an operating system.

For example, in a Linux operating system, available maximum virtual address space is 2⁴⁸ bytes. Therefore, the available address space of the Serverless workflow may be set to 2⁴⁸ bytes.

Step 805: Initial address (start)=Start address of the maximum virtual address space.

Specifically, a variable start is initialized as the initial address, and a value of start is the start address of the maximum virtual address space, for example, 0x400000.

Step 806: Initialize content of a queue, where each element in the queue corresponds to one instance of one function, and a quantity of instances of one function is a maximum concurrent execution count of the function.

One queue is initialized based on the computational graph of the Serverless workflow and the maximum concurrent execution count of each function. Each element in the queue corresponds to one instance of one function, and a quantity of instances of one function is a maximum concurrent execution count of the function.

Step 807: Determine whether the queue is empty.

If the queue is not empty, step 808 continues to be performed; or if the queue is empty, planning the virtual address space for the function in the Serverless workflow is stopped.

Step 808: Extract an element from the queue.

Step 809: Query a maximum memory limit (limit) of a function corresponding to the element.

Step 8010: Set <start, start+limit> to virtual address space of the function corresponding to the element.

Step 8011: Set start to start plus limit.

Step 8012: Remove the element from the queue.

After step 8012 is performed, step 807 continues to be performed.

In conclusion, based on the procedure shown in FIG. 8, an orchestrator apparatus can plan the corresponding virtual address space for each function in the Serverless workflow, and ensure that different functions in a same Serverless workflow correspond to different virtual address space.

Therefore, during execution of the Serverless workflow, the orchestrator apparatus schedules one computing apparatus to run one function in the Serverless workflow, and sends virtual address space corresponding to the function to the computing apparatus that runs the function. In this way, when starting, based on scheduling by the orchestrator apparatus, a container to run the function, the computing apparatus invokes a kernel of the operating system to ensure that virtual address space of the started container conforms to the virtual address space planned by the orchestrator apparatus, thereby ensuring that a virtual address used by the run function conforms to the plan. In other words, the kernel of the operating system in the computing apparatus creates, based on the virtual address space sent by the orchestrator apparatus, the container for running the function.

The following separately describes processes in which an orchestrator apparatus schedules different computing apparatuses to run a function serving as a data producer and a function serving as a data consumer.

When an orchestrator apparatus schedules a computing apparatus A (corresponding to the second computing apparatus in the foregoing embodiments) to run a function serving as a data producer, after the computing apparatus A completes running of the function and generates data, the computing apparatus A may call register_mem (register _mem is a function provided by a kernel of an operating system), to create a distributed shared memory, so that subsequently, a function on another computing apparatus can access, by using the shared memory, the data generated by the computing apparatus A. Specifically, steps performed after the computing apparatus A calls register_mem are as follows:

Step 1: Traverse a page table of a container that runs the function.

The function run in the container is the function serving as the data producer, and generates the data for use by another function. The page table of the container is a page table corresponding to virtual address space used by the function.

Step 2: Set, to copy-on-write, permission of all pages whose permission is write in the page table.

Step 3: Record the page table of the container.

Step 4: Generate an authorization key, and return the authorization key to a user, to prevent an unauthorized container from accessing data in a memory of a current computing apparatus.

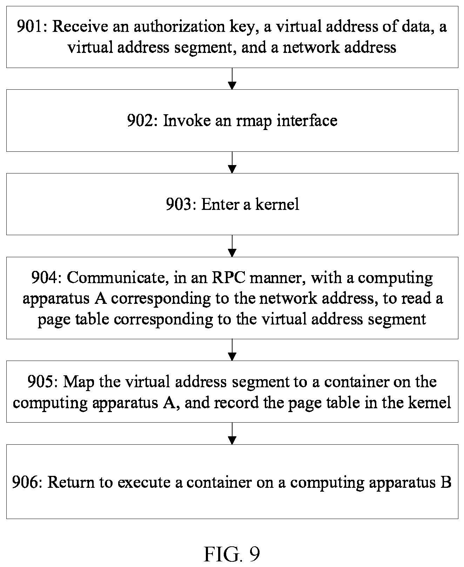

After completing calling of register_mem, the computing apparatus A sends the authorization key, a virtual address of data that needs to be transmitted, and a virtual address segment corresponding to the function to the orchestrator apparatus. The orchestrator apparatus further sends the authorization key, the virtual address of the data that needs to be transmitted, the virtual address segment corresponding to the function, and a network address of the computing apparatus A to a computing apparatus B (corresponding to the first computing apparatus in the foregoing embodiments) that runs a next function in the Serverless workflow. After receiving the foregoing information, the computing apparatus B invokes an rmap interface to establish a distributed shared memory with a container on the computing apparatus A, so as to quickly access the data generated by the function on the computing apparatus A. A process in which the computing apparatus B receives the information and invokes the rmap interface is shown in FIG. 9. FIG. 9 is a diagram of a procedure of invoking an rmap interface by a computing apparatus according to an embodiment of this application. The procedure shown in FIG. 9 includes the following steps 901 to 906.

Step 901: A container on the computing apparatus B receives the authorization key, the virtual address of data, the virtual address segment, and the network address of the computing apparatus A.

Step 902: The container on the computing apparatus B invokes the rmap interface, to trigger execution of steps 903 to 906.

Step 903: Enter a kernel.

Step 904: The kernel in the computing apparatus B communicates, in an RPC manner, with the computing apparatus A corresponding to the network address, to read a page table corresponding to the virtual address segment.

Step 905: The kernel in the computing apparatus B maps the page table to the container on the computing apparatus A, and records the page table in the kernel.

In other words, the kernel establishes a relationship between the page table and the container on the computing apparatus A. In this way, when a physical address in the page table is found, data at the physical address can be read from the computing apparatus A.

Step 906: Return from the kernel to execute the container on the computing apparatus B.

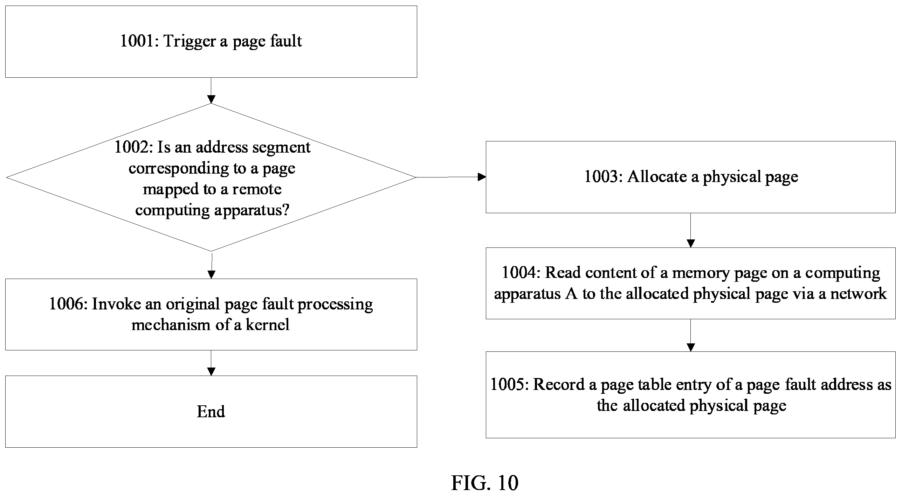

After the computing apparatus B completes invoking of rmap, the function on the computing apparatus B can trigger access to the virtual address of the data. Because the virtual address, of the data, accessed by the function is the virtual address on the computing apparatus A, and no mapping relationship between the virtual address and a physical address is established on the computing apparatus B, a page fault is triggered when the virtual address of the data is accessed. After the page fault is triggered, the kernel in the computing apparatus B may process the page fault based on the steps shown in FIG. 10. Herein, FIG. 10 is a diagram of a procedure of processing a page fault according to an embodiment of this application. The procedure in FIG. 10 includes the following steps 1001 to 1006.

Step 1001: Trigger the page fault when the function on the computing apparatus B accesses the virtual address of the data.

Step 1002: Determine whether an address segment corresponding to a page in the page fault is mapped to a remote computing apparatus.

Step 1003: Allocate a physical page if the address segment corresponding to the page is mapped to the remote computing apparatus.

Specifically, when the computing apparatus B performs step 905 shown in FIG. 9, the computing apparatus B maps the virtual address segment to the remote computing apparatus A, to determine that the address segment corresponding to the page in the page fault is mapped to the remote computing apparatus.

Step 1004: Read content of a memory page on the computing apparatus A to the allocated physical page via a network.

To be specific, data at a specific physical address in a memory of the computing apparatus A is read to the allocated physical page via the network.

Step 1005: Record a page table entry of a page fault address as the allocated physical page, to eliminate the page fault, so that when the function on the computing apparatus B accesses the virtual address of the data, access to data on the allocated physical page can be triggered.

Step 1006: Invoke an original page fault processing mechanism of the kernel if the address segment corresponding to the page is not mapped to the remote computing apparatus.

In this embodiment, with reference to the embodiment shown in FIG. 9 and the embodiment shown in FIG. 10, data transmission between different computing apparatuses is implemented based on the kernel of the operating system, which is compatible with an existing function. In this way, overheads of data serialization and deserialization can be reduced without modifying the existing function, and data transmission efficiency is improved.

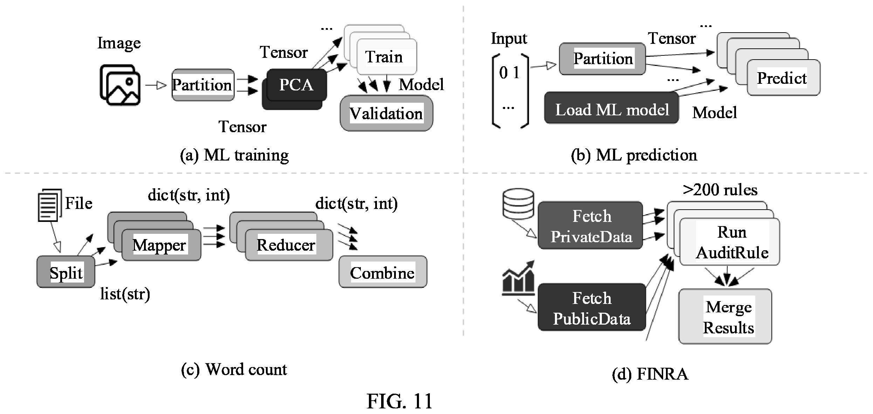

For example, FIG. 11 is a diagram of some scenarios to which a data transmission method is applied according to an embodiment of this application. As shown in FIG. 11, the data transmission method provided in embodiments of this application may be applied to a plurality of scenarios. Different scenarios are used to execute different Serverless workflows. For example, in (a) in FIG. 11, ML training represents a model training scenario in machine learning; in (b) in FIG. 11, ML prediction represents a scenario in which prediction is performed by using a model in machine learning; in (c) in FIG. 11, word count represents a batch processing application similar to a programming model MapReduce; and in (d) in FIG. 11, FINRA represents a financial application, and main logic of FINRA is to review various transactions.

When the data transmission method provided in embodiments of this application is applied to the plurality of scenarios shown in FIG. 11, end-to-end delays in different scenarios can be reduced by 14% to 98%. Performance is mainly improved by reducing serialization and deserialization.

The foregoing embodiments describe the data transmission method provided in embodiments of this application. The following describes a device for performing the foregoing data transmission method.

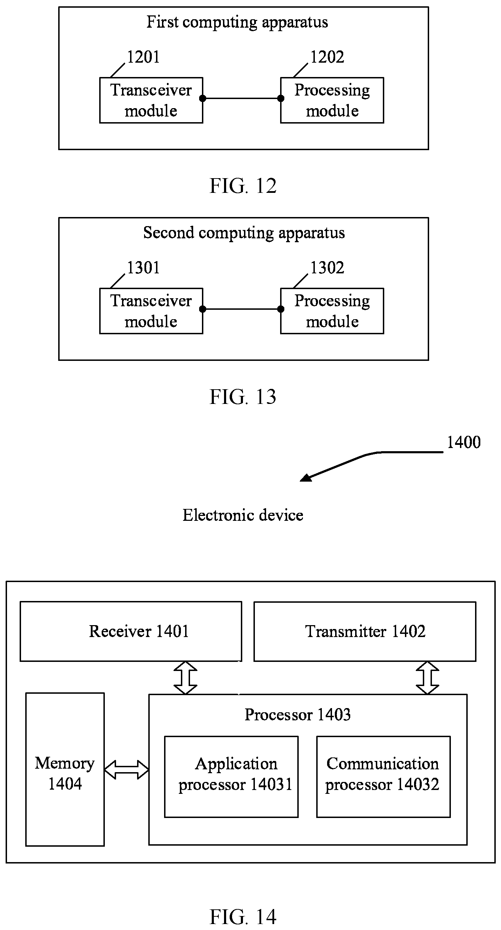

FIG. 12 is a diagram of a structure of a first computing apparatus according to an embodiment of this application. As shown in FIG. 12, the first computing apparatus provided in this embodiment includes: a transceiver module 1201, configured to obtain a first virtual address, a network address, and a page table, where the first virtual address is a virtual address that is on a second computing apparatus and that corresponds to first data generated by the second computing apparatus, the network address is an address of the second computing apparatus, and the page table is used to record a mapping relationship between a virtual address and a physical address on the second computing apparatus; and a processing module 1202, configured to determine, based on the first virtual address and the page table, a first physical address at which the first data is located on the second computing apparatus. The transceiver module 1201 is further configured to read the first data from the first physical address on the second computing apparatus based on the network address.

In a possible implementation, the first computing apparatus and the second computing apparatus are respectively configured to run different functions on a Serverless platform, and an input of a function run on the first computing apparatus includes data generated by a function run on the second computing apparatus.

In a possible implementation, the processing module 1202 is further configured to: in response to a page fault caused when the function run on the first computing apparatus requests to access the first virtual address, determine, by the first computing apparatus based on the first virtual address and the page table, the first physical address at which the first data is located on the second computing apparatus.

In a possible implementation, the transceiver module 1201 is further configured to: receive the first virtual address, the network address, and a virtual address segment that are sent by an orchestrator apparatus, where the orchestrator apparatus is configured to obtain a virtual address of the data generated by the second computing apparatus, and the virtual address segment indicates a virtual address range corresponding to the data generated by the second computing apparatus; and obtain, from the second computing apparatus based on the network address, the page table corresponding to the virtual address segment, where the page table is used to record a mapping relationship between a virtual address in the virtual address segment and a physical address.

In a possible implementation, the transceiver module 1201 is further configured to: send a page table read request to the second computing apparatus, where the page table read request includes the virtual address segment, and the page table read request is used to request to read the page table corresponding to the virtual address segment; and receive the page table sent by the second computing apparatus.

In a possible implementation, the transceiver module 1201 is further configured to receive first virtual address space sent by the orchestrator apparatus; and the processing module 1202 is further configured to run the function based on the first virtual address space. The first virtual address space indicates space in which a virtual address used by the function is located.

In a possible implementation, the first virtual address space does not overlap second virtual address space, and the second virtual address space is virtual address space used by the function run on the second computing apparatus.

FIG. 13 is a diagram of a structure of a second computing apparatus according to an embodiment of this application. As shown in FIG. 13, the second computing apparatus provided in this embodiment includes: a transceiver module 1301, configured to send a first virtual address and a virtual address segment to an orchestrator apparatus. The first virtual address is a virtual address that is on the second computing apparatus and that corresponds to first data generated by the second computing apparatus, the virtual address segment indicates a virtual address range corresponding to data generated by the second computing apparatus, the first virtual address belongs to the virtual address segment, and the orchestrator apparatus is configured to forward the first virtual address and the virtual address segment to a first computing apparatus. The transceiver module 1301 is further configured to send a page table to the first computing apparatus in response to the first computing apparatus requesting to read the virtual address segment. The page table is used to record a mapping relationship between a virtual address in the virtual address segment and a physical address, and the page table records a mapping relationship between the first virtual address and a first physical address. The transceiver module 1301 is further configured to return the first data at the first physical address to the first computing apparatus in response to the first computing apparatus requesting to access the first physical address.

In a possible implementation, the first computing apparatus and the second computing apparatus are respectively configured to run different functions on a Serverless platform, and an input of a function run on the first computing apparatus includes data generated by a function run on the second computing apparatus.

In a possible implementation, the second computing apparatus further includes: a processing module 1302, configured to set permission for a target physical address to copy-on-write. The target physical address is a physical address that is recorded in the page table and whose original permission is write.

In a possible implementation, the second computing apparatus further includes the processing module 1302; the transceiver module 1301 is further configured to receive second virtual address space sent by the orchestrator apparatus; and the processing module 1302 is configured to run the function based on the second virtual address space. The second virtual address space indicates space in which a virtual address used by the function is located.

In a possible implementation, first virtual address space does not overlap the second virtual address space, and the first virtual address space is virtual address space used by the function run on the first computing apparatus.

The following describes an electronic device provided in an embodiment of this application. FIG. 14 is a diagram of a structure of an electronic device according to an embodiment of this application. An electronic device 1400 may be specifically represented as a server, a mobile phone, a tablet computer, a notebook computer, an intelligent wearable device, or the like. This is not limited herein. Specifically, the electronic device 1400 includes a receiver 1401, a transmitter 1402, a processor 1403, and a memory 1404 (there may be one or more processors 1403 in the electronic device 1400, and one processor is used as an example in FIG. 14). The processor 1403 may include an application processor 14031 and a communication processor 14032. In some embodiments of this application, the receiver 1401, the transmitter 1402, the processor 1403, and the memory 1404 may be connected through a bus or in another manner.

The memory 1404 may include a read-only memory and a random access memory, and provide instructions and data for the processor 1403. A part of the memory 1404 may further include a non-volatile random access memory (non-volatile random access memory, NVRAM). The memory 1404 stores processor and operation instructions, an executable module, or a data structure, or a subset thereof, or an extended set thereof. The operation instructions may include various operation instructions for implementing various operations.

The processor 1403 controls an operation of the electronic device. During specific application, various components of the electronic device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1403 or may be implemented by the processor 1403. The processor 1403 may be an integrated circuit chip and has a signal processing capability. In an implementation process, steps in the foregoing methods may be completed by using a hardware integrated logic circuit in the processor 1403, or by using instructions in a form of software. The processor 1403 may be a general-purpose processor, a digital signal processor (digital signal processor, DSP), a microprocessor, or a microcontroller. The processor 1403 may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1403 may implement or perform the methods, steps, and logical block diagrams disclosed in embodiments of this application. The general-purpose processor may be a microprocessor, or the processor may be any conventional processor, or the like. The steps in the methods disclosed with reference to embodiments of this application may be directly completed by a hardware decoding processor, or may be completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1404, and the processor 1403 reads information in the memory 1404 and completes the steps in the foregoing methods in combination with hardware of the processor 1403.

The receiver 1401 may be configured to: receive input digital or character information, and generate a signal input related to related settings and function control of the electronic device. The transmitter 1402 may be configured to output digit or character information through a first interface. The transmitter 1402 may be further configured to send instructions to a disk group through the first interface, to modify data in the disk group. The transmitter 1402 may further include a display device, for example, a display.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in the execution device to perform the rendering method described in the foregoing embodiments. Optionally, the storage unit is a storage unit in the chip, for example, a register or a cache. Alternatively, the storage unit may be a storage unit that is in the wireless access device end and that is outside the chip, for example, a read-only memory (read-only memory, ROM), another type of static storage device that can store static information and instructions, or a random access memory (random access memory, RAM).

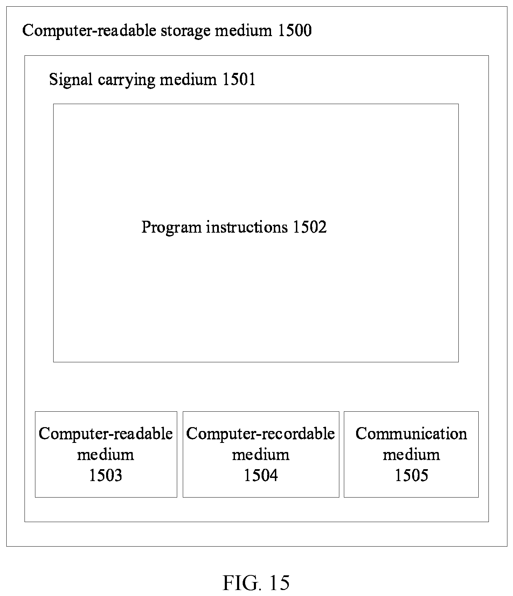

FIG. 15 is a diagram of a structure of a computer-readable storage medium according to an embodiment of this application. This application further provides a computer-readable storage medium. In some embodiments, the method disclosed in FIG. 5 may be implemented as computer program instructions encoded in a machine-readable format on the computer-readable storage medium or encoded in another non-transitory medium or product.

FIG. 15 schematically shows a conceptual partial view of an example computer-readable storage medium arranged according to at least a part of embodiments shown herein. The example computer-readable storage medium includes a computer program for executing a computer process on a compute device.

In an embodiment, the computer-readable storage medium 1500 is provided by using a signal carrying medium 1501. The signal carrying medium 1501 may include one or more program instructions 1502, and when the program instructions 1502 are run on one or more processors, the foregoing functions described for FIG. 5 or a part of the functions is provided. In addition, the program instructions 1502 in FIG. 15 are also described as example instructions.

In some examples, the signal carrying medium 1501 may include a computer-readable medium 1503, for example, but not limited to, a hard disk drive, a compact disc (CD), a digital video disc (DVD), a digital tape, a memory, a ROM, or a RAM.

In some implementations, the signal carrying medium 1501 may include a computer-recordable medium 1504, for example, but not limited to a memory, a read/write (R/W) CD, or an R/W DVD. In some implementations, the signal carrying medium 1501 may include a communication medium 1505, for example, but not limited to a digital and/or analog communication medium (for example, an optical fiber cable, a waveguide, a wired communication link, or a wireless communication link). Therefore, for example, the signal carrying medium 1501 may be conveyed by the communication medium 1505 in a wireless form (for example, a wireless communication medium that complies with the IEEE 802 standard or another transmission protocol).

The one or more program instructions 1502 may be, for example, computer-executable instructions or logic implementation instructions. In some examples, a compute device may be configured to provide various operations, functions, or actions in response to the program instructions 1502 transmitted to the compute device by using one or more of the computer-readable medium 1503, the computer-recordable medium 1504, and/or the communication medium 1505.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A data transmission method, comprising:
obtaining, by a first computing apparatus, a first virtual address, a network address, and a page table, wherein the first virtual address is a virtual address that is on a second computing apparatus and that corresponds to first data generated by the second computing apparatus, the network address is an address of the second computing apparatus, and the page table is used to record a mapping relationship between a virtual address and a physical address on the second computing apparatus;
determining, by the first computing apparatus based on the first virtual address and the page table, a first physical address at which the first data is located on the second computing apparatus; and
reading, by the first computing apparatus, the first data from the first physical address on the second computing apparatus based on the network address.

2. The method according to claim 1, wherein the method is applied to a serverless Serverless platform, the first computing apparatus and the second computing apparatus are respectively configured to run different functions on the Serverless platform, and an input of a function run on the first computing apparatus comprises data generated by a function run on the second computing apparatus.

3. The method according to claim 1 or 2, wherein the determining, by the first computing apparatus based on the first virtual address and the page table, the first physical address at which the first data is located on the second computing apparatus comprises:
in response to a page fault caused when the function run on the first computing apparatus requests to access the first virtual address, determining, by the first computing apparatus based on the first virtual address and the page table, the first physical address at which the first data is located on the second computing apparatus.

4. The method according to any one of claims 1 to 3, wherein the obtaining, by the first computing apparatus, the first virtual address, the network address, and the page table comprises:
receiving, by the first computing apparatus, the first virtual address, the network address, and a virtual address segment that are sent by an orchestrator apparatus, wherein the orchestrator apparatus is configured to obtain a virtual address of the data generated by the second computing apparatus, and the virtual address segment indicates a virtual address range corresponding to the data generated by the second computing apparatus; and
obtaining, by the first computing apparatus from the second computing apparatus based on the network address, the page table corresponding to the virtual address segment, wherein the page table is used to record a mapping relationship between a virtual address in the virtual address segment and a physical address.

5. The method according to claim 4, wherein the obtaining, by the first computing apparatus from the second computing apparatus based on the network address, the page table corresponding to the virtual address segment comprises:
sending, by the first computing apparatus, a page table read request to the second computing apparatus, wherein the page table read request comprises the virtual address segment, and the page table read request is used to request to read the page table corresponding to the virtual address segment; and
receiving, by the first computing apparatus, the page table sent by the second computing apparatus.

6. The method according to any one of claims 1 to 5, wherein the method further comprises:
receiving, by the first computing apparatus, first virtual address space sent by the orchestrator apparatus; and
running, by the first computing apparatus, the function based on the first virtual address space, wherein the first virtual address space indicates space in which a virtual address used by the function is located.

7. The method according to claim 6, wherein the first virtual address space does not overlap second virtual address space, and the second virtual address space is virtual address space used by the function run on the second computing apparatus.

8. A data transmission method, comprising:
sending, by a second computing apparatus, a first virtual address and a virtual address segment to an orchestrator apparatus, wherein the first virtual address is a virtual address that is on the second computing apparatus and that corresponds to first data generated by the second computing apparatus, the virtual address segment indicates a virtual address range corresponding to data generated by the second computing apparatus, the first virtual address belongs to the virtual address segment, and the orchestrator apparatus is configured to forward the first virtual address and the virtual address segment to a first computing apparatus;
sending, by the second computing apparatus, a page table to the first computing apparatus in response to the first computing apparatus requesting to read the virtual address segment, wherein the page table is used to record a mapping relationship between a virtual address in the virtual address segment and a physical address, and the page table records a mapping relationship between the first virtual address and a first physical address; and
returning, by the second computing apparatus, the first data at the first physical address to the first computing apparatus in response to the first computing apparatus requesting to access the first physical address.

9. The method according to claim 8, wherein the method is applied to a Serverless platform, the first computing apparatus and the second computing apparatus are respectively configured to run different functions on the Serverless platform, and an input of a function run on the first computing apparatus comprises data generated by a function run on the second computing apparatus.

10. The method according to claim 8 or 9, wherein the method further comprises:
setting, by the second computing apparatus, permission for a target physical address to copy-on-write, wherein the target physical address is a physical address that is recorded in the page table and whose original permission is write.

11. The method according to any one of claims 8 to 10, wherein the method further comprises:
receiving, by the second computing apparatus, second virtual address space sent by the orchestrator apparatus; and
running, by the second computing apparatus, the function based on the second virtual address space, wherein the second virtual address space indicates space in which a virtual address used by the function is located.

12. The method according to claim 11, wherein first virtual address space does not overlap the second virtual address space, and the first virtual address space is virtual address space used by the function run on the first computing apparatus.

13. A first computing apparatus, comprising:
a transceiver module, configured to obtain a first virtual address, a network address, and a page table, wherein the first virtual address is a virtual address that is on a second computing apparatus and that corresponds to first data generated by the second computing apparatus, the network address is an address of the second computing apparatus, and the page table is used to record a mapping relationship between a virtual address and a physical address on the second computing apparatus; and
a processing module, configured to determine, based on the first virtual address and the page table, a first physical address at which the first data is located on the second computing apparatus, wherein
the transceiver module is further configured to read the first data from the first physical address on the second computing apparatus based on the network address.

14. The apparatus according to claim 13, wherein the first computing apparatus and the second computing apparatus are respectively configured to run different functions on a Serverless platform, and an input of a function run on the first computing apparatus comprises data generated by a function run on the second computing apparatus.

15. The apparatus according to claim 13 or 14, wherein the processing module is further configured to:
in response to a page fault caused when the function run on the first computing apparatus requests to access the first virtual address, determine, by the first computing apparatus based on the first virtual address and the page table, the first physical address at which the first data is located on the second computing apparatus.

16. The apparatus according to any one of claims 13 to 15, wherein the transceiver module is further configured to:
receive the first virtual address, the network address, and a virtual address segment that are sent by an orchestrator apparatus, wherein the orchestrator apparatus is configured to obtain a virtual address of the data generated by the second computing apparatus, and the virtual address segment indicates a virtual address range corresponding to the data generated by the second computing apparatus; and
obtain, from the second computing apparatus based on the network address, the page table corresponding to the virtual address segment, wherein the page table is used to record a mapping relationship between a virtual address in the virtual address segment and a physical address.

17. The apparatus according to claim 16, wherein the transceiver module is further configured to:
send a page table read request to the second computing apparatus, wherein the page table read request comprises the virtual address segment, and the page table read request is used to request to read the page table corresponding to the virtual address segment; and
receive the page table sent by the second computing apparatus.

18. The apparatus according to any one of claims 13 to 17, wherein
the transceiver module is further configured to receive first virtual address space sent by the orchestrator apparatus; and
the processing module is further configured to run the function based on the first virtual address space, wherein the first virtual address space indicates space in which a virtual address used by the function is located.

19. The apparatus according to claim 18, wherein the first virtual address space does not overlap second virtual address space, and the second virtual address space is virtual address space used by the function run on the second computing apparatus.

20. A second computing apparatus, comprising:
a transceiver module, configured to send a first virtual address and a virtual address segment to an orchestrator apparatus, wherein the first virtual address is a virtual address that is on the second computing apparatus and that corresponds to first data generated by the second computing apparatus, the virtual address segment indicates a virtual address range corresponding to data generated by the second computing apparatus, the first virtual address belongs to the virtual address segment, and the orchestrator apparatus is configured to forward the first virtual address and the virtual address segment to a first computing apparatus, wherein
the transceiver module is further configured to send a page table to the first computing apparatus in response to the first computing apparatus requesting to read the virtual address segment, wherein the page table is used to record a mapping relationship between a virtual address in the virtual address segment and a physical address, and the page table records a mapping relationship between the first virtual address and a first physical address; and
the transceiver module is further configured to return the first data at the first physical address to the first computing apparatus in response to the first computing apparatus requesting to access the first physical address.

21. The apparatus according to claim 20, wherein the first computing apparatus and the second computing apparatus are respectively configured to run different functions on a Serverless platform, and an input of a function run on the first computing apparatus comprises data generated by a function run on the second computing apparatus.

22. The apparatus according to claim 20 or 21, wherein the apparatus further comprises:
a processing module, configured to set permission for a target physical address to copy-on-write, wherein the target physical address is a physical address that is recorded in the page table and whose original permission is write.

23. The apparatus according to any one of claims 20 to 22, wherein the apparatus further comprises the processing module;
the transceiver module is further configured to receive second virtual address space sent by the orchestrator apparatus; and
the processing module is configured to run the function based on the second virtual address space, wherein the second virtual address space indicates space in which a virtual address used by the function is located.

24. The apparatus according to claim 23, wherein first virtual address space does not overlap the second virtual address space, and the first virtual address space is virtual address space used by the function run on the first computing apparatus.

25. A computing apparatus, comprising a memory and a processor, wherein the memory stores code, the processor is configured to execute the code, and when the code is executed, the apparatus performs the method according to any one of claims 1 to 12.

26. A data transmission system, comprising the first computing apparatus according to any one of claims 13 to 19, the second computing apparatus according to any one of claims 20 to 24, and an orchestrator apparatus, wherein the orchestrator apparatus is configured to implement data forwarding between the first computing apparatus and the second computing apparatus.

27. A computer storage medium, wherein the computer storage medium stores instructions, and when the instructions are executed by a computer, the computer is enabled to implement the method according to any one of claims 1 to 12.

28. A computer program product, wherein the computer program product stores instructions, and when the instructions are executed by a computer, the computer is enabled to implement the method according to any one of claims 1 to 12.
